# EUROPÄISCHE PATENTSCHRIFT

(11) **EP 0 578 894 B1**
(45) Veröffentlichungstag und Bekanntmachung des Hinweises auf die Patenterteilung: **17.04.1996**
(21) Anmeldenummer: 92810540.2
(22) Anmeldetag: 16.07.1992
(51) Int. Cl.: F02F 1/22

(54) **Zylindereinsatz für eine Hubkolbenbrennkraftmaschine**
Cylinder insert for an internal combustion engine
Insertion d'un cylindre pour un moteur à combustion interne

(43) Veröffentlichungstag der Anmeldung: 19.01.1994
(73) Patentinhaber: NEW SULZER DIESEL AG, CH-8401 Winterthur (CH)
(72) Erfinder: Schütz, Mathias, CH-8037 Zürich (CH); Schachenmann, Andreas, Dr., CH-8200 Schaffhausen (CH)
(74) Vertreter: Hammer, Bruno, Dr.

(56) Entgegenhaltungen:
- EP-A- 0 400 338
- FR-A- 592 567
- FR-A- 758 092
- US-A- 2 195 044

## Beschreibung

Die Erfindung bezieht sich auf einen Zylindereinsatz für eine Zweitakt-Hubkolbenbrennkraftmaschine mit den Merkmalen des Oberbegriffs des Anspruchs 1.

Ein solcher Zylindereinsatz ist aus Fig.2 der FR-PS 592 567 bekannt. In diesem Zylindereinsatz sind die Lufteinlassschlitze über etwa den halben Umfang verteilt angeordnet und in zwei symmetrische Gruppen unterteilt, von denen jede sich etwa über ein viertel Umfang erstreckt. Die Lufteinlassschlitze sind so ausgebildet, dass sich die Luftströme - in Strömungsrichtung gesehen - in einem auf der Symmetrieachse liegenden Bereich hinter der Zylinderachse treffen. Zum Verlängern der jeweils zwei äussersten Lufteinlassschlitze sind fluchtend vor den Stegen Führungswände vorgesehen. Die beiden Führungswände jeder Gruppe sind an eine in Umfangsrichtung des Zylindereinsatzes bewegbare Leiste angelenkt, mit deren Hilfe die zugehörigen Führungswände um zur Zylinderachse parallele Achsen verschwenkt werden können, so dass sich die Richtung der den Lufteinlassschlitzen zuströmenden Luft verändern lässt. Mit diesen beiden bewegbaren Vorrichtungen wird wegen der fluchtenden Anordnung der Führungswände die Geometrie der Lufteinlassschlitze nicht verändert. Es wird im Zylinder auch keine Drallströmung der Luft um die Zylinderachse erzeugt.

Bei dem Zylindereinsatz, auf den sich die Erfindung bezieht, wird davon ausgegangen, dass die Lufteinlassschlitze in einem Winkel zu einer Radialebene angeordnet sind, so dass die die Einlassschlitze durchströmende Luft im Zylinderraum eine Drallströmung um die Zylinderachse ausführt. Die Drallgeschwindigkeit dieser Luftströmung hat einen grossen Einfluss auf die Betriebsdaten der Hubkolbenbrennkraftmaschine, nämlich den Brennstoffverbrauch, die Rauchbildung, die Qualität der Spülung sowie die Temperatur des Zylindereinsatzes und der übrigen den Brennraum umgebenden Bauteile. Die Geometrie der Lufteinlassschlitze wurde bisher aufgrund der Motorbetriebsdaten festgelegt und blieb dann unverändert.

Es hat sich aber gezeigt, dass es im Hinblick darauf, dass die Brennkraftmaschine mit verschiedenen Lasten und Drehzahlen betrieben werden soll, wünschenswert ist, die Drallgeschwindigkeit im Zylinderraum an solche unterschiedliche Betriebszustände anzupassen. Der Erfindung liegt die Aufgabe zugrunde, einen Zylindereinsatz der eingangs genannten Art dahingehend zu verbessern, dass mit konstruktiv einfachen Massnahmen und Mitteln die Drallgeschwindigkeit im Zylinderraum während des Betriebes geändert werden kann.

Diese Aufgabe wird erfindungsgemäss durch die Merkmale des Kennzeichens des Anspruchs 1 gelöst.

Hierdurch lässt sich während des Betriebes der Hubkolbenbrennkraftmaschine durch Verstellen der Dralländerungsvorrichtung die Richtung der in den Zylinderraum einströmenden Luft und damit deren Drallgeschwindigkeit leicht an die jeweilige Last und/oder Drehzahl der Hubkolbenbrennkraftmaschine anpassen. Die oben erwähnten Betriebsdaten lassen sich dadurch last- und drehzahlabhängig optimieren. Dadurch dass die bewegbare Vorrichtung sich mit ihren Führungsflächen innerhalb der Lufteinlassschlitze befindet, kann sie vor dem Einbauen des Zylindereinsatzes in die Brennkraftmaschine am Zylindereinsatz montiert und dann zusammen mit diesem eingebaut werden. Ein weiterer Vorteil der Erfindung besteht darin, dass sie auch nachträglich an bereits im Betrieb befindlichen Brennkraftmaschinen anwendbar ist, indem gegebenenfalls die Stege durch Nachbearbeiten in eine geeignete Form gebracht werden und der Zylindereinsatz dann mit der beanspruchten Dralländerungsvorrichtung ausgerüstet wird.

Aus der EP-OS 400 338 ist ein Zylinder für einen Zweitaktmotor bekannt, der hauptsächlich für Motorräder bestimmt ist, die mit einem Gemisch aus Luft, Benzin und Schmieröl betrieben werden. Die über einen Teil des Zylinderumfangs angeordneten Lufteinlassschlitze stehen mit Luftkanälen in Verbindung, die sich von einem tiefer liegenden Luftansaugstutzen aus in der Zylinderwand aufwärts erstrecken und dann bogenförmig in einen Schlitz übergehen. In dem bogenförmigen Kanalabschnitt zweier Lufteinlassschlitze ist je ein zungenartiges rechteckiges Blechelement mit seinem einen Rand befestigt, während der dazu parallele freie Rand sich quer zur Zylinderachse erstreckt und in den Querschnitt des Lufteintrittsschlitzes ragt. Dieser freie Rand des Blechelementes soll sich im Betrieb des Motors bewegen und dabei den Querschnitt des Lufteinlassschlitzes verändern. Die Bewegung soll als Folge des mit der Last des Motors variierenden Druckabfalls der den jeweiligen Kanal durchströmenden Gemischmenge eintreten. Mit der Anordnung der Blechelemente, bei der die Lufteinlassschlitze keine Drallströmung im Zylinderraum erzeugen, soll vermieden werden, dass das in den Zylinder einströmende brennbare Gemisch sich zu stark mit dem Abgas des vorhergehenden Arbeitstaktes mischt.

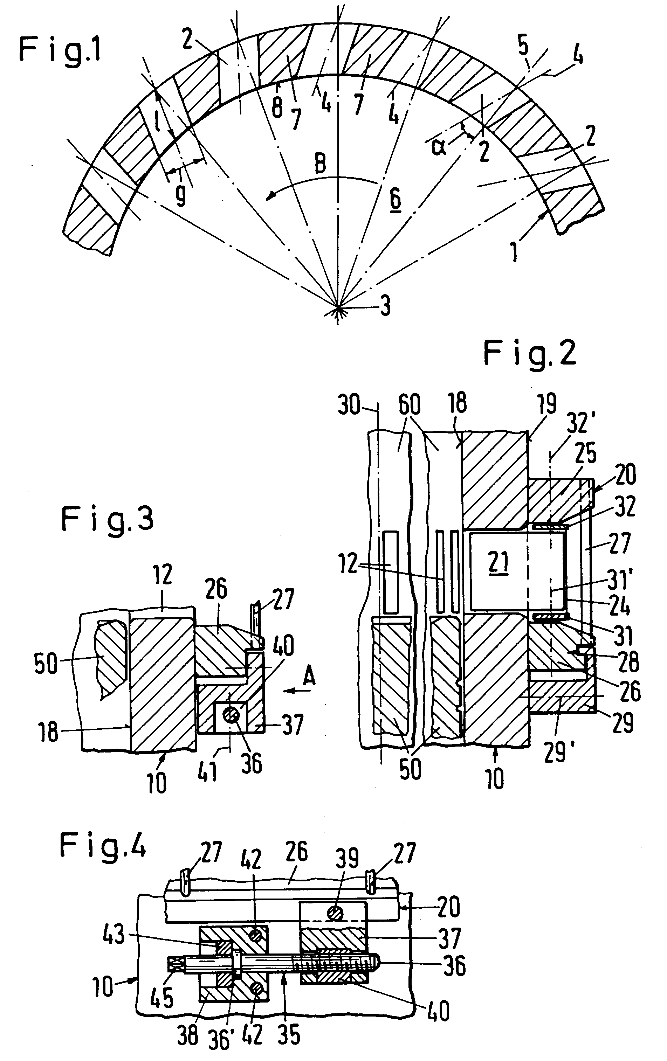

Einige Ausführungsbeispiele der Erfindung werden in der folgenden Beschreibung anhand der Zeichnung näher erläutert. Es zeigen:
- Fig.1: einen Querschnitt durch einen Teil eines bekannten Zylindereinsatzes mit Lufteinlassschlitzen,
- Fig.2: einen Axialschnitt durch einen Teil eines erfindungsgemässen Zylindereinsatzes mit einer Dralländerungsvorrichtung,
- Fig.3: einen Axialschnitt - ähnlich dem in Fig.2 - an einer in Umfangsrichtung des Zylindereinsatzes verschobenen Stelle,
- Fig.4: eine Ansicht in Richtung des Pfeiles A in Fig.3,
- Fig.5: schematisch einen Teilquerschnitt durch den Zylindereinsatz in Fig.2,
- Fig.5a und 5b: gleiche Teilquerschnitte wie in Fig.5, jedoch mit verschiedenen Stellungen der Dralländerungsvorrichtung,
- Fig.6: einen der Fig.5 entsprechenden Teilquerschnitt mit einer anderen Ausführungsform der Dralländerungsvorrichtung und
- Fig.6a und 6b: gleiche Teilquerschnitte wie in Fig.6, mit anderen Stellungen der Dralländerungsvorrichtung.
Gemäss Fig.1 weist eine nicht näher dargestellte Zweitakt-Hubkolbenbrennkraftmaschine der Dieselbauart einen Zylindereinsatz 1 auf, in dem eine Reihe von Lufteintrittsschlitzen 2 angeordnet ist, die über den ganzen Umfang des Zylindereinsatzes gleichmässig verteilt sind. Die Lufteinlassschlitze 2 haben im wesentlichen rechteckigen Querschnitt, wobei die längere Achse dieses Querschnitts parallel zur Achse 3 des Zylindereinsatzes verläuft. Die vertikal zur Schnittebene in Fig.1 verlaufende Mittelebene 4 jedes Lufteinsatzschlitzes 2 schneidet nicht die Achse 3, sondern bildet mit einer durch diese Achse verlaufenden Radialebene 5 einen Winkel Alpha. Durch diese Schrägstellung der Mittelebenen 4 ergibt sich für die die Einlassschlitze 2 durchströmende Luft eine Drallbewegung (Pfeil B) in dem vom Zylindereinsatz 1 umschlossenen Raum 6, wodurch der Spülvorgang günstig beeinflusst wird. Beim bekannten Zylindereinsatz 1 ist die Drallströmung der Luft im Raum 6 bei Vollast und bei Teillast der Hubkolbenbrennkraftmaschine im wesentlichen durch den Luftdurchsatz und die Dichte der Luft gegeben, was nicht in jedem Betriebspunkt dem Optimum entsprechen muss.

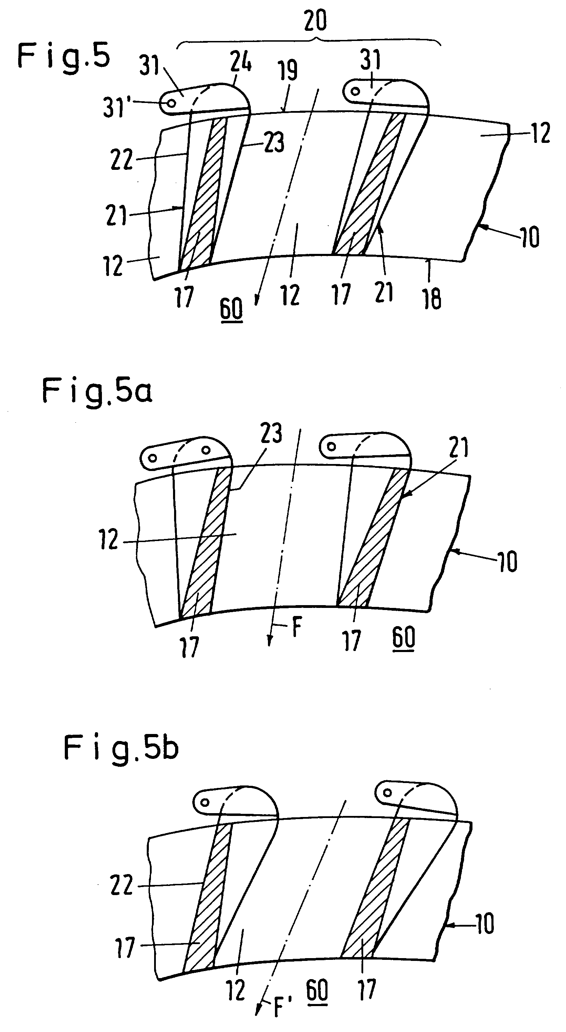

Erfindungsgemäss ist gemäss Fig.5 in einem Zylindereinsatz 10 aus Gusseisen oder Stahlguss eine Dralländerungsvorrichtung 20 vorgesehen, die je Steg 17 einen U-förmigen Körper 21 aufweist, der z.B. aus Blech besteht. Jeder Körper 21 weist zwei Schenkel 22 und 23 sowie einen diese Schenkel an deren aussen liegenden Rändern verbindenden Abschnitt 24 auf. Die beiden Schenkel 22 und 23 erstrecken sich von aussen beiderseits eines Steges 17 in zwei einander benachbarte Lufteinlassschlitze 12 und bilden Führungsflächen für die an ihnen entlangströmende Luft. Sie liegen mit ihren der Lauffläche 18 des Zylindereinsatzes 10 zugewendeten Rändern nahe dem dieser Lauffläche zugewendeten Ende des Steges 17 an dessen die Einlassschlitze begrenzenden Flächen an, und zwar elastisch federnd. In Richtung der Längsachse 30 des Zylindereinsatzes 10 (Fig.2) erstrecken sich die U-förmigen Körper 21 jeweils im wesentlichen über die gesamte Höhe der Einlassschlitze 12. Der Verbindungsabschnitt 24 jedes Körpers 21 befindet sich ausserhalb des Zylindereinsatzes 10 und ist dort mit einer in Fig.2 bis 4 näher dargestellten Vorrichtung zum Ausüben einer Schwenkbewegung auf die Körper 21 verbunden.

Gemäss Fig.2 ist oberhalb und unterhalb der Reihe von Lufteinlassschlitzen 12 je ein Ring 25 und 26 vorgesehen, von denen jeder auf der Aussenseite 19 des Zylindereinsatzes 10 in Umfangsrichtung verschiebbar angeordnet sind.

Die beiden Ringe 25 und 26 sind im Bereich ihres äusseren Umfangs über mehrere Stangen 27 miteinander fest verbunden, die über den Umfang der Ringe verteilt angeordnet sind. Der untere Ring 26 weist in seiner äusseren Umfangsfläche eine Ringnut 28 auf, die rechteckigen Querschnitt hat. In die Ringnut 28 ragt eine Nase eines Führungsklotzes 29, der unterhalb des Ringes 26 am Zylindereinsatz 1 befestigt ist wie durch die strichpunktierte Linie 29' angedeutet ist. Ueber den Umfang des Zylindereinsatzes 10 verteilt sind mehrere Führungsklötze 29 angebracht. Zwischen die beiden Ringe 25 und 26 ragen die U-förmigen Körper 21 mit ihrem Verbindungsabschnitt 24. Jeder Körper 21 ist über zwei an ihm befestigte Laschen 31 und 32 mit den beiden Ringen 25 und 26 gelenkig verbunden. Die gelenkige Verbindung ist durch die strichpunktierten, miteinander fluchtenden Linien 31' und 32' angedeutet. In Fig.2 ist noch der im Zylindereinsatz 10 auf- und abbewegliche Arbeitskolben 50 angedeutet, und zwar in seinem unteren Totpunkt. Am oberen Ende des Zylindereinsatzes befindet sich in bekannter Weise ein Zylinderdeckel, in dem ein Auslassventil angeordnet ist. Während des Betriebes der Brennkraftmaschine findet in dem Zylindereinsatz also Längsspülung statt.

An einer Stelle des Umfangs des Zylindereinsatzes 10 ist gemäss Fig. 3 und 4 eine Stellvorrichtung 35 zum Verschwenken der Dralländerungsvorrichtung 20 vorgesehen. Die Stellvorrichtung 35 befindet sich zwischen zwei Führungsklötzen 29. Sie umfasst eine Gewindespindel 36, einen den Gewindeabschnitt der Spindel 36 aufnehmenden Antriebsklotz 37 und einen die Gewindespindel 36 aufnehmenden Fixierungsklotz 38. Der Antriebsklotz 37 ist gemäss Fig.3 in einer Aussparung im äusseren Umfang des Ringes 26 an diesem befestigt, z.B. mittels einer Schraube 39. Im unteren Teil des Antriebsklotzes 37 ist ein Gewindestück 40 eingesetzt, das ein der Gewindespindel 36 entsprechendes Innengewinde aufweist und im Antriebsklotz 37 um eine vertikale Achse 41 drehbar ist. Der Fixierungsklotz 38 ist mittels zweier Schrauben 42 am Zylindereinsatz 10 befestigt. Die im Fixierungsklotz 38 geführte Gewindespindel 36 weist einen Bund 36' auf, der durch einen in den Fixierungsklotz 38 eingesetzten Gewindering 43 in axialer Richtung festgehalten wird. Das aus dem Fixierungsklotz herausragende freie Ende der Gewindespindel 36 ist mit einem Vierkant 45 versehen, über den die Gewindespindel angetrieben werden kann, sei es von Hand oder mittels eines nicht dargestellten Stellmotors. Beim Drehen der Gewindespindel 36 verschiebt sich der Antriebsklotz 37 in Umfangsrichtung des Zylindereinsatzes 10, wodurch der Ring 26 mitgenommen und die Dralländerungsvorrichtung 20 verschwenkt wird, so dass deren U-förmige Körper 21 ihre Lage relativ zu den Stegen 17 ändern. Durch diese Aenderung wird auch die Richtung der die Lufteinlassschlitze 12 durchströmenden Luft geändert, wobei je nach der Richtung der Schwenkbewegung die Drallströmung im Zylinderraum 60 vergrössert oder verkleinert wird, wie dies in Fig.5b bzw. Fig.5a durch die unterschiedliche Richtung der Pfeile F und F' dargestellt ist.

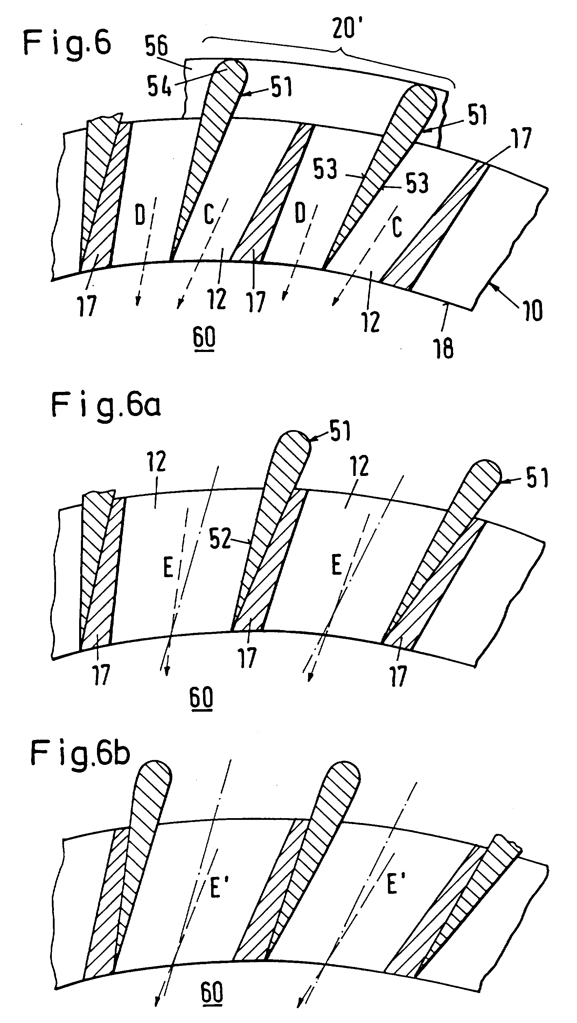

Bei der Dralländerungsvorrichtung 20' gemäss Fig.6 sind - anstelle von je einen Steg umfassenden U-förmigen Körpern - Keilkörper 51 vorgesehen, von denen jeweils einer einem Lufteinlassschlitz 12 des Zylindereinsatzes 10 zugeordnet ist. Die Keilflächen 52 und 53 jedes Keilkörpers 51 verjüngen sich in Richtung auf die Lauffläche 18 des Zylindereinsatzes 10 und enden im Lufteinlassschlitz nahe dieser Lauffläche. Der Keilwinkel beträgt etwa 8°. Das dicke Ende 54 jedes Keilkörpers 51 ist in nicht näher dargestellter Weise fest mit zwei den Zylindereinsatz 10 umgebenden Ringen 56 verbunden, die den Ringen 25 und 26 in Fig.2 entsprechen. Wegen der festen Verbindung zwischen den Keilkörpern 51 und den Ringen 56 entfallen jedoch die Stangen 27 und die Laschen 31 und 32. In Richtung der Längsachse 30 des Zylindereinsatzes 10 erstrecken sich die Keilkörper 51 im wesentlichen über die gesamte Höhe der Lufteinlassschlitze 12.

Ein Bewegen der Dralländerungsvorrichtung 20' kann in prinzipiell gleicher Weise erfolgen wie zu Fig.2 bis 5b beschrieben, nämlich durch Verschwenken der die Keilkörper 51 verbindenden Ringe 56 auf dem Zylindereinsatz 10. In Fig.6 befinden sich die Keilkörper 51 in einer Mittelstellung zwischen den Stegen 17 des Zylindereinsatzes, wodurch die dem Zylindereinsatz zuströmende Luft in jedem Einlassschlitz 12 in zwei Teilströme (Pfeil C und D) aufgeteilt wird, die also unter verschiedenen Winkeln in den Zylinderraum 60 strömen. Der Teilluftstrom C erzeugt im Zylinderraum eine Hochdrallströmung, während der Teilluftstrom D eine Tiefdrallströmung erzeugt. Die beiden Teilströme vermischen sich im Zylinderraum 60, wodurch eine Turbulenzerhöhung der Drallströmung eintritt.

In Fig.6a ist die Dralländerungsvorrichtung 20' in einer Extremstellung dargestellt, in der die Keilkörper 51 jeweils mit ihrer Keilfläche 53 an einem Steg 17 anliegen. In diesem Fall ergibt sich nur ein Luftstrom (Pfeil E) je Lufteinlassschlitz 12. Gegenüber der Stellung in Fig.6 ergibt sich also eine Dralländerung im Zylinderraum 60. Durch Verschwenken der Dralländerungsvorrichtung 20' im Gegenuhrzeigersinn können die Keilkörper 51 bis in die andere, in Fig.6b dargestellte Extremlage verschoben werden, in der sie also mit ihrer Keilfläche 52 jeweils an einem Steg 17 anliegen. In dieser Stellung der Keilkörper ergibt sich also wiederum eine Aenderung der Strömungsrichtung der Luft (Pfeil E') in den Einlassschlitzen 12 und damit eine Aenderung der Drallströmung im Zylinderraum 60.

In Fig.5 und 6 sind die Stege 17, von der Lauffläche 18 ausgehend, zur Aussenseite 19 des Zylindereinsatzes 10 sich verjüngend dargestellt. Durch diese Steggestaltung wird für die Dralländerungsvorrichtung 20 bzw. 20' der grösstmögliche Verstellbereich erzielt. Die Grenze für die Verjüngung der Stege ist durch die Festigkeit des Stegmaterials gesetzt. Unter Inkaufnahme einer Verringerung des Verstellbereiches kann die Stegbreite an der Aussenseite 19 auch grösser als gezeichnet sein. Die Stegbreite kann z.B. auch konstant sein.

Dadurch dass der Zylindereinsatz aus Gusseisen oder Stahlguss besteht, ergibt sich eine relativ grosse Wanddicke des Zylindereinsatzes. Bei ausserhalb der Lufteinlassschlitze und des Zylindereinsatzes angebrachten Leitschaufeln für die Luft würde diese Wanddicke zu einer grossen Führungslänge 1 am feststehenden Steg 7 (Fig.1) für die Luft im Einlassschlitz 2 führen. Das Verhältnis dieser Länge 1 zur Schlitzbreite g - in Umfangsrichtung des Zylindereinsatzes sowie an dessen Lauffläche gemessen - sollte nicht grösser als 0,5 sein. Mit der erfindungsgemässen Vorrichtung ist es möglich, bei gegebenem Verstellbereich eine grösstmögliche Festigkeit und ein 1/g-Verhältnis von weniger als 0,2 zu erreichen.

Abweichend von den beschriebenen Ausführungsbeispielen ist es auch möglich, die Lufteinlassschlitze 12 im Zylindereinsatz 10 so anzuordnen, dass ohne Anordnung der Dralländerungsvorrichtung 20 oder 20' die Luft radial in den Zylinderraum einströmen würde.

## Patentansprüche

1. Zylindereinsatz für eine Zweitakt-Hubkolbenbrennkraftmaschine, mit die Wand des Zylindereinsatzes (10) geradlinig durchquerenden, durch Stege (17) voneinander getrennten Lufteinlassschlitzen (12) und mit einer in Umfangsrichtung des Zylindereinsatzes bewegbaren, Führungsflächen (22, 23; 52, 53) für die Luft aufweisenden Vorrichtung (20, 20'), durch die die Richtung der Luftströmung veränderbar ist,wobei die Lufteinlassschlitze (12) im wesentlichen rechteckigen Querschnitt aufweisen, wobei die längere Achse dieses Querschnitts zur Achse (30) des Zylindereinsatzes parallel verläuft, dadurch gekennzeichnet, dass die Lufteinlassschlitze (12) über den gesamten Umfang des Zylindereinsatzes (10) verteilt angeordnet sind, und dass die bewegbare Vorrichtung (20, 20') als Dralländerungsvorrichtung ausgebildet ist und mit ihren Führungsflächen (22, 23; 52, 53) zwischen den Stegen (17) in die Lufteinlassschlitze (12) ragend angeordnet ist, wobei die Führungsflächen sich parallel zur Achse (30) des Zylindereinsatzes (10) erstrecken.

2. Zylindereinsatz nach Anspruch 1, dadurch gekennzeichnet, dass die bewegbare Vorrichtung (20) so viele U-förmige Körper (21) aufweist wie Stege (17) vorhanden sind und jedem Steg ein U-förmiger Körper zugeordnet ist, der die beiden jeweils einen Lufteinlassschlitz (12) begrenzenden Flächen sowie die Aussenfläche des zugehörigen Steges umgibt, wobei die den beiden Begrenzungsflächen benachbarten Schenkel (22, 23) jedes U-förmigen Körpers die Führungsflächen bilden.

3. Zylindereinsatz nach Anspruch 1, dadurch gekennzeichnet, dass die bewegbare Vorrichtung (20') so viele Keilkörper (51) aufweist wie Lufteinlassschlitze (12) vorhanden sind und jedem Lufteinlassschlitz ein Keilkörper zugeordnet ist, wobei das sich verjüngende Keilende zur Zylinderlauffläche (18) hin angeordnet ist und die Keilflächen (52, 53) die Führungsflächen bilden.

4. Zylindereinsatz nach Anspruch 2, dadurch gekennzeichnet, dass die U-förmigen Körper (21) an ihren aussen liegenden Enden gelenkig an mindestens einem Ring (25, 26) befestigt sind, der an der Aussenseite (19) des Zylindereinsatzes (10) um dessen Längsachse (30) schwenkbar geführt ist.

5. Zylindereinsatz nach Anspruch 3, dadurch gekennzeichnet, dass die Keilkörper (51) an ihren aussen liegenden Enden an mindestens einem Ring (56) befestigt sind, der an der Aussenseite (19) des Zylindereinsatzes (10) um dessen Längsachse (30) schwenkbar geführt ist.

6. Zylindereinsatz nach Anspruch 4 oder 5, dadurch gekennzeichnet, dass der Ring (26; 56) durch einen Stellmotor (35) bewegbar ist.

7. Zylindereinsatz nach einem der Ansprüche 1 bis 6, dadurch gekennzeichnet, dass jeder Steg (17), von der Zylinderlauffläche ausgehend, nach aussen verjüngt ist.

## Claims

1. Cylinder insert for a two-stroke reciprocating piston internal combustion engine comprising air inlet slots (12) which pass through the wall of the cylinder insert (10) in a straight line and are separated from one another by webs (17), and a device (20, 20') movable in the circumferential direction of the cylinder insert and having guide surfaces (20, 23; 52, 53) for the air by which the direction of the air flow can be changed, with the air inlet slots (12) having a substantially rectangular cross-section, with the longer axis of this cross-section extending parallel to the axis (30) of the cylinder insert,
characterized in that
the air inlet slots (12) are arranged distributed over the whole circumference of the cylinder insert (10); and in that the movable device (20, 20') is formed as a twist changing device and is arranged with its guide surfaces (22, 23; 52, 53) projecting between the webs (17) into the air inlet slots (12), with the guide surfaces extending parallel to the axis (30) of the cylinder insert (10).

2. Cylinder insert in accordance with claim 1,
characterized in that
the movable device (20) has as many U-shaped bodies (21) as webs (17) with a U-shaped body being associated with each web and surrounding the two surfaces which respectively bound one air inlet slot (12) and also the outer surface of the associated web, with the limbs (22, 23) of each U-shaped body adjacent the two boundary surfaces forming for the guide surfaces.

3. Cylinder insert in accordance with claim 1,
characterized in that
the movable device (20') has as many wedge bodies (51) as air inlet slots (12) with one wedge body being associated with each air inlet slot, with the tapering wedge end being arranged towards the cylinder running surface (18) and with the wedge surfaces (52, 53) forming the guide surfaces.

4. Cylinder insert in accordance with claim 2,
characterized in that
the U-shaped bodies (21) are hingedly secured at the outwardly disposed ends to at least one ring (25, 26) which is pivotally guided at the outer side (19) of the cylinder insert (10) about its longitudinal axis (30).

5. Cylinder insert in accordance with claim 3,
characterized in that
the wedge bodies (51) are secured at their outwardly disposed ends to at least one ring (56) which is pivotally guided at the outer side (19) of the cylinder insert (10) about its longitudinal axis (30).

6. Cylinder insert in accordance with claim 4 or claim 5,
characterized in that
the ring (25; 56) is movable by a positioning motor (35).

7. Cylinder insert in accordance with one of the claims 1 to 6,
characterized in that
each web (17) tapers outwardly starting from the cylinder running surface.

## Revendications

1. Chemise de cylindre pour un moteur à combustion interne, à piston alternatif, à deux temps, avec des fentes de lumières (12) qui passent à travers la paroi de la chemise de cylindre (10) en ligne droite et qui sont séparées les unes des autres par des entretoises (17) et avec un dispositif (20, 20') qui peut se déplacer dans le sens périphérique de la chemise de cylindre et qui présente des surfaces de guidage (22, 23; 52, 53) pour l'air, dispositif grâce auquel on peut faire varier la direction de l'écoulement de l'air, la fente de la lumière (12) présentant une section transversale sensiblement rectangulaire, l'axe le plus long de cette section transversale s'étendant parallèlement à l'axe (30) de la chemise de cylindre, chemise de cylindre caractérisée en ce que les fentes des lumières (12) sont réparties sur tout le pourtour de la chemise de cylindre (10) et en ce que le dispositif mobile (20,20') est constitué comme dispositif de variation du tourbillonnement et est disposé de façon à faire saillie par ses surfaces de guidage (22, 23; 52, 53) entre les entretoises (17) dans la fente de la lumière (12), les surfaces de guidage s'étendant parallèlement à l'axe (30) de la chemise de cylindre (10).

2. Chemise de cylindre selon la revendication 1, caractérisée en ce que le dispositif mobile (20) présente autant de corps en forme d'U (21) qu'il existe d'entretoises (17) et en ce qu'à chaque entretoise est associé un corps en forme d'U, qui entoure les deux faces délimitant respectivement une fente de lumière (12) ainsi que la face extérieure de l'entretoise correspondante, les ailes (22, 23) de chaque corps en forme d'U, voisines des deux surfaces de délimitation , formant les surfaces de guidage.

3. Chemise de cylindre selon la revendication 1, caractérisée en ce que le dispositif mobile (20') présente autant de corps en forme de coin (51) qu'il existe de fentes de lumières (12) et en ce qu'à chaque fente d'amenée d'air est associé un corps en forme de coin, l'extrémité qui va en se rétrécissant étant disposée en direction de la surface de glissement du cylindre (18) et les surfaces obliques (52, 53) du corps en forme de coin formant les surfaces de guidage.

4. Chemise de cylindre selon la revendication 2, caractérisée en ce que les corps en forme d'U (21) sont fixés à leurs extrémités situées à l'extérieur de façon articulée sur au moins une bague (25, 26), qui est guidée de façon à pouvoir pivoter sur le côté extérieur (19) de la chemise de cylindre (10) autour de son axe longitudinal (30).

5. Chemise de cylindre selon la revendication 3, caractérisée en ce que les corps en forme de coin (51) sont fixés, à leurs extrémités situées à l'extérieur, sur au moins une bague (56) qui est guidée de façon à pouvoir pivoter sur le côté extérieur (19) de la chemise de cylindre (10) autour de son axe longitudinal (30).

6. Chemise de cylindre selon la revendication 4 ou 5, caractérisée en ce que la bague (25; 26) peut être déplacée par un servomoteur (35).

7. Chemise de cylindre selon l'une des revendications 1 à 6, caractérisée en ce que chaque entretoise (17), en partant de la surface de glissement du cylindre, va en se rétrécissant vers l'extérieur.
